# EUROPÄISCHE PATENTSCHRIFT

(11) **EP 1 387 929 B1**
(45) Veröffentlichungstag und Bekanntmachung des Hinweises auf die Patenterteilung: **09.08.2006**
(21) Anmeldenummer: 02737823.1
(22) Anmeldetag: 30.04.2002
(51) Int. Cl.: F01N 3/08

(54) **VERFAHREN ZUM BETREIBEN EINER BRENNKRAFTMASCHINE, INSBESONDERE EINES KRAFTFAHRZEUGS**
METHOD FOR OPERATING AN INTERNAL COMBUSTION ENGINE, ESPECIALLY A MOTOR VEHICLE INTERNAL COMBUSTION ENGINE
PROCEDE PERMETTANT LE FONCTIONNEMENT D'UN MOTEUR A COMBUSTION INTERNE APPARTENANT NOTAMMENT A UN VEHICULE AUTOMOBILE

(30) Priorität: 10.05.2001 DE 10122636
(43) Veröffentlichungstag der Anmeldung: 11.02.2004
(73) Patentinhaber: ROBERT BOSCH GMBH, 70442 Stuttgart (DE)
(72) Erfinder: SCHALLER, Johannes, 71229 Leonberg (DE); WEBER, Georg, 90542 Eckental (DE)
(86) Internationale Anmeldenummer: PCT/DE2002/001565
(87) Internationale Veröffentlichungsnummer: WO 2002/090732

(56) Entgegenhaltungen:
- EP-A- 0 862 941
- EP-A- 1 223 312
- US-A- 5 406 790

## Beschreibung

### Stand der Technik

Die Erfindung geht aus von einem Verfahren zum Betreiben einer Brennkraftmaschine, insbesondere eines Kraftfahrzeugs nach dem Oberbegriff des Patentanspruchs 1. Die Erfindung betrifft ebenfalls eine Brennkraftmaschine, insbesondere für ein Kraftfahrzeug sowie ein Steuergerät oder ein Zusatzgerät für eine derartige Brennkraftmaschine.

Es sind Brennkraftmaschinen, beispielsweise Diesel-Brennkraftmaschinen bekannt, bei denen zur Reinigung des entstehenden Abgases ein Oxidationskatalysator und ein Speicherkatalysator vorhanden sind. Auch bei Benzin-Brennkraftmaschinen, insbesondere bei direkteinspritzenden Brennkraftmaschinen, ist es bekannt, zur Abgasreinigung einen Speicherkatalysator zu verwenden. Derartige Speicherkatalysatoren werden in zwei Betriebsphasen betrieben. Während einer Beladungsphase wird der Speicherkatalysator mit Stickoxiden beladen, die in dem Speicherkatalysator zwischengespeichert werden. Während einer Regenerierphase werden die Stickoxide wieder aus dem Speicherkatalysator abgeführt, und der Speicherkatalysator wird auf diese Weise regeneriert. Zur Regenierung des Speicherkatalysators, also während der Entladungsphase, wird dem Speicherkatalysator ein "angefetteter" Abgasstrom, also ein kraftstoffbeladener Abgasstrom zugeführt. Während der Beladungsphase kann die Brennkraftmaschine mager, also mit einem Lambda größer 1 betrieben werden. Die dabei entstehenden Stickoxide werden - wie gesagt - in dem Speicherkatalysator zwischengespeichert und gelangen damit nicht als Schadstoffe in die Umwelt. Bei der Regenerierung des Speicherkatalysators werden die zwischengespeicherten Stickoxide in unschädliche Stoffe umgewandelt und ins Freie abgegeben.

Insbesondere bei Diesel-Brennkraftmaschinen ist es bekannt, im Abgasrohr derselben eine Gabelung anzubringen, um an dieser Stelle eine Klappe unterzubringen. Mit Hilfe der Klappe kann die Menge des Abgasstroms zu dem Speicherkatalysator verändert werden. Insbesondere kann der Abgasstrom zu dem Speicherkatalysator während der Entladungsphase vermindert werden, um auf diese Weise eine zu starke Beaufschlagung des Speicherkatalysators mit Abgasen zu vermeiden und eine Anfettung des Abgasstroms zu vereinfachen.

Weiterhin ist es insbesondere bei Diesel-Brennkraftmaschinen bekannt, dem Abgasstrom, der dem Speicherkatalysator zugeführt wird, während der Entladungsphase ein Kraftstoff/Luft-Gemisch zuzufügen, um auf diese Art und Weise den bereits erwähnten, "angefetteten" und damit kraftstoffbeladenen (Lambda kleiner 1) Abgasstrom zu erreichen.

Es hat sich gezeigt, dass die beschriebene Betriebsweise, insbesondere das Umschalten zwischen der Beladungsphase und der Entladungsphase des Speicherkatalysators noch nicht ausreicht, um eine Abgabe von Schadstoffen an die Umwelt möglichst weitgehend zu vermeiden.

Aufgabe und Vorteile der Erfindung Aufgabe der Erfindung ist es, ein Verfahren zum Betreiben einer Brennkraftmaschine zu schaffen, mit dem möglichst wenig Schadstoffe an die Umwelt abgegeben werden.

Diese Aufgabe wird durch ein Verfahren nach dem Patentanspruch 1 gelöst. Die Aufgabe wird ebenfalls von einer entsprechenden Brennkraftmaschine sowie durch ein Steuergerät oder ein Zusatzgerät für diese Brennkraftmaschine gelöst.

Gemäß dem kennzeichnenden Teil des Patentanspruchs 1 besteht ein wesentliches Merkmal der Erfindung darin, dass beim Umschalten von der Entladungsphase zu der Beladungsphase das Zufügen des Kraftstoff/Luft-Gemisches zu dem Abgasstrom nicht gleichzeitig mit dem Vermindern des Abgasstroms beendet wird, sondern dass das Vermindern des Abgasstroms erst nach einer bestimmten Zeitdauer, nämlich nach einer vorgegebenen Spülzeit stattfindet. Es wird also erfindungsgemäß zuerst kein Kraftstoff/Luft-Gemisch mehr dem Abgasstrom hinzugefügt, um danach - nach Ablauf der vorgegebenen Spülzeit - die Verminderung des Abgasstroms zu beenden. Mit anderen Worten bedeutet dies, dass die in dem Abgasrohr der Brennkraftmaschine untergebrachte Klappe erst nach Ablauf der Spülzeit in denjenigen Zustand umgeschaltet wird, der für die Beladungsphase des Speicherkatalysators vorgesehen ist.

Durch diese verzögerte Umschaltung der Klappe in dem Abgasrohr wird erreicht, dass dasjenige Kraftstoff/Luft-Gemisch, das während der Entladungsphase zuletzt dem Abgasstrom hinzugefügt worden ist, noch mit dem verminderten Abgasstrom zu dem Speicherkatalysator gelangt. Durch diesen verminderten Abgasstrom wird gewährleistet, dass das Kraftstoff/Luft-Gemisch in der erwünschten Weise zur Regeneration des Speicherkatalysators beitragen kann. Es gelangen damit keine Kohlenwasserstoffe ungereinigt durch den Speicherkatalysator hindurch ins Freie. Dies bedeutet, dass weniger Schadstoffe an die Umwelt abgegeben werden.

Von besonderer Bedeutung ist die Realisierung des erfindungsgemäßen Verfahrens in der Form eines Computerprogramms, das für ein Steuergerät oder ein Zusatzgerät vorgesehen ist. Das Computergerät ist insbesondere auf einem Mikroprozessor des Steuergeräts oder des Zusatzgeräts ablauffähig und kann dann das erfindungsgemäße Verfahren ausführen. In diesem Fall wird also die Erfindung durch das Computerprogramm realisiert, so dass dieses Computerprogramm in gleicher Weise die Erfindung darstellt, wie das Verfahren, zu dessen Ausführung das Computerprogramm geeignet ist. Besonders vorteilhaft ist es dabei, wenn das Computerprogramm auf einem elektrischen Speichermedium, beispielsweise auf einem Flash-Memory abgespeichert ist.

Weitere Merkmale, Anwendungsmöglichkeiten und Vorteile der Erfindung ergeben sich aus der nachfolgenden Beschreibung von Ausführungsbeispielen der Erfindung, die in den Figuren der Zeichnung dargestellt sind. Dabei bilden alle beschriebenen oder dargestellten Merkmale für sich oder in beliebiger Kombination den Gegenstand der Erfindung, unabhängig von ihrer Zusammenfassung in den Patentansprüchen oder deren Rückbeziehung sowie unabhängig von ihrer Formulierung bzw. Darstellung in der Beschreibung bzw. in der Zeichnung.

### Ausführungsbeispiele der Erfindung

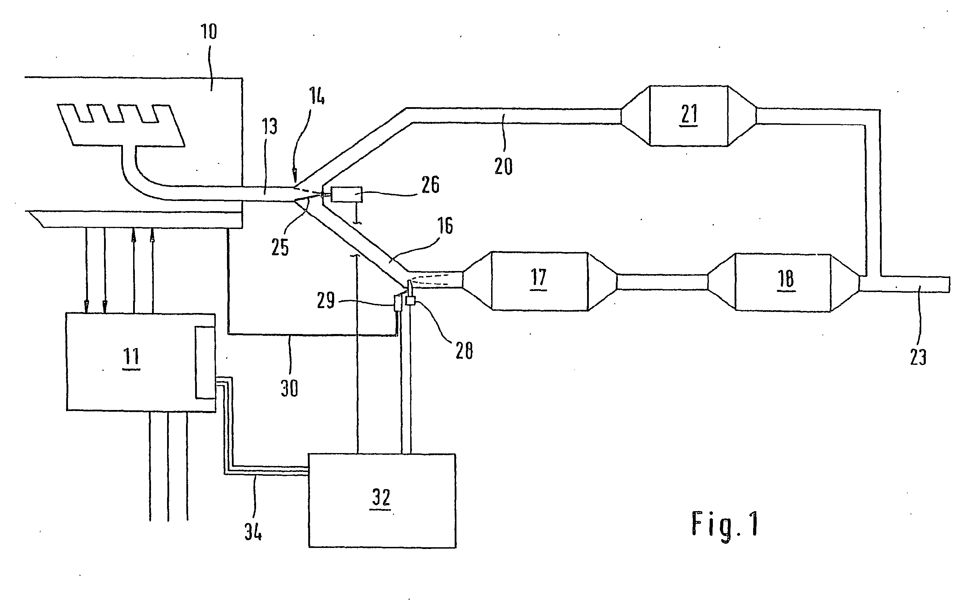

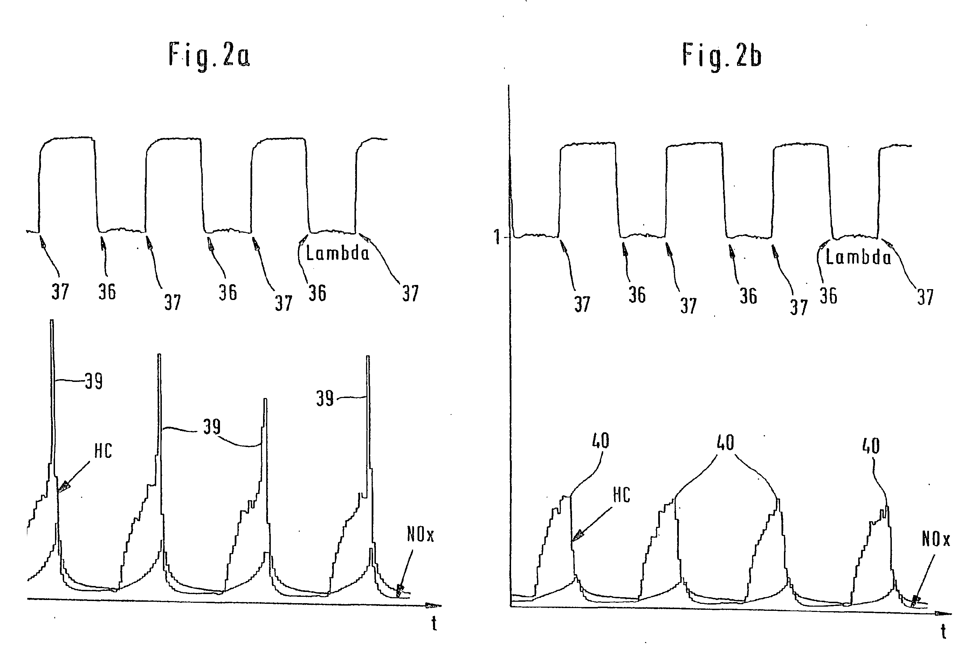

Figur 1 zeigt ein schematisches Blockschaltbild eines Ausführungsbeispiels einer erfindungsgemäßen Brennkraftmaschine und Figuren 2a und 2b zeigen schematische Diagramme von Betriebsgrößen der Brennkraftmaschine der Figur 1 bei einem Verfahren nach dem Stand der Technik und bei einem Verfahren nach einem Ausführungsbeispiel der Erfindung.

In der Figur 1 ist eine Brennkraftmaschine 10 dargestellt, bei der es sich insbesondere um eine Diesel-Brennkraftmaschine handelt. Die Brennkraftmaschine 10 ist über Ein- und Ausgangssignale mit einem Steuergerät 11 gekoppelt. Das Steuergerät 11 ist mit einem Mikroprozessor oder dgl. versehen, auf dem ein Computerprogramm gespeichert ist, das dazu geeignet ist, die erforderlichen Verfahren zur Steuerung und/oder Regelung der Betriebsgrößen der Brennkraftmaschine 10 durchzuführen.

Die Brennkraftmaschine 10 ist mit einem Abgasrohr 13 versehen, dem die bei der Verbrennung des Kraftstoffs entstehenden Abgase zugeführt werden. An das Abgasrohr 13 schließt sich eine Gabelung 14 an, an die zwei oder mehr Abgaszweige angeschlossen sind.

In einem ersten Zweig 16 ist das Abgasrohr 13 nacheinander mit einem Oxidationskatalysator 17 und einem Speicherkatalysator 18 verbunden. Bei dem Speicherkatalysator 18 handelt es sich insbesondere um einen sogenannten NOx-Speicherkatalysator. In einem zweiten Zweig 20 ist das Abgabrohr 13 mit einem Dreiwegekatalysator 21 verbunden. Alternativ ist es möglich, dass in dem zweiten Zweig 20 anstelle des Dreiwegekatalysators 21 ein. Oxidationskatalysator und ein nachgeordneter Speicherkatalysator vorgesehen sind. Bei dieser Alternative sind somit die beiden Zweige 16 und 20 gleichartig ausgebildet.

Nach dem Speicherkatalysator 18 und dem Dreiwegekatalysator 21 sind die beiden Zweige 16 und 20 wieder zu einem gemeinsamen Abgasrohr 23 zusammengeführt.

Im Bereich der Gabelung 14 ist das Abgasrohr 13 mit einer Klappe 25 versehen. Die Klappe 25 kann zwischen zwei Endstellungen hin- und hergeschaltet werden. In der ersten Endstellung wird der gesamte Abgasstrom in den ersten Zweig 16 geleitet, während in der zweiten Endstellung der Klappe 25 der gesamte Abgasstrom in den zweiten Zweig 20 geleitet wird. In der Figur 1 ist die letztgenannte, zweite Endstellung dargestellt.

Die Klappe 25 kann auch auf jegliche Zwischenstellung zwischen den beiden beschriebenen Endstellungen eingestellt werden. In diesen Fällen wird das Abgas anteilsmäßig auf die beiden Zweige 16, 20 verteilt. Die Anteile der beiden entstehenden Abgasströme ist dabei abhängig von der Stellung der Klappe 25.

Der Klappe 25 ist ein Stellglied 26 zugeordnet, mit dem die Klappe 25 in die beiden Endstellungen, wie auch in jegliche Zwischenstellung eingestellt werden kann. Bei dem Stellglied 26 kann es sich beispielsweise um einen elektrischen Stellmotor, pneumatischer Steller oder dergl. handeln, der mit der Klappe 25 kraftschlüssig gekoppelt ist.

In dem ersten Zweig 16 ist nach der Gabelung 14 und vor dem Oxidationskatalysator 17 ein Zerstäuber 28 vorgesehen. Anstelle des Zerstäubers 28 kann auch eine Einspritzdüse oder dgl. vorhanden sein. Mit Hilfe des Zerstäubers 28 ist es möglich, Kraftstoff oder ein Kraftstoff/Luft-Gemisch in den ersten Zweig 16 einzuführen, und zwar derart, dass es in dem ersten Zweig 16 in Form eines kraftstoffbeladenen Gases oder Kraftstoffdampfes vorhanden ist.

In dem vorliegenden Ausführungsbeispiel ist dem Zerstäuber 28 ein Verdampfer 29 zugeordnet, bei dem es sich um einen Glühstift oder um eine sonstige Heizeinrichtung handeln kann. Dem Verdampfer 29 und dem Zerstäuber 28 wird über eine Leitung 30 Kraftstoff von der Brennkraftmaschine 10 zugeführt. Dieser Kraftstoff wird dann von dem Verdampfer 29 erhitzt, so dass ein Kraftstoff/Luft-Gemisch entsteht. Dieses kraftstoffbeladene Gas wird dann mit Hilfe des Zerstäubers 28 - wie erläutert - dem ersten Zweig 16 zugeführt.

Der über den Zerstäuber 28 dem ersten Zweig 16 zugeführte Kraftstoffdampf gelangt aufgrund des durch den ersten Zweig 16 hindurchströmenden Abgases zuerst zu dem Oxidationskatalysator 17 und danach zu dem Speicherkatalysator 18.

Das Stellglied 26, der Zerstäuber 28 und der Verdampfer 29 sind mit einem Zusatzgerät 32 gekoppelt, bei dem es sich um ein Steuergerät handelt, mit dem das Stellglied 26, der Verdampfer 28 und der Zerstäuber 29 gesteuert und/oder geregelt werden können. Insbesondere kann von dem Zusatzgerät 32 über das Stellglied 26 die Klappe 25 verstellt werden. Ebenfalls kann von dem Zusatzgerät 32 der Verdampfer 28 geöffnet werden, so dass die Zuführung von kraftstoffbeladenem Gas zu dem Oxidationskatalysator 17 und dem Speicherkatalysator 18 ein- und ausgeschaltet werden kann.

Das Zusatzgerät 32 ist über ein Bussystem 34 mit dem Steuergerät 11 gekoppelt. Damit ist es möglich, dass das Zusatzgerät 32 die für die Ansteuerung des Stellglieds 26, des Zerstäubers 28 und des Verdampfers 29 erforderlichen Betriebsgrößen der Brennkraftmaschine 10 über dieses Bussystem 34 von dem Steuergerät 11 erhält. Ebenfalls ist es auf diese Weise möglich, dass das Zusatzgerät 32 über das Bussystem 34 Informationen an das Steuergerät 11 übermittelt.

Im Betrieb der Brennkraftmaschine 10 werden zwei Betriebsphasen unterschieden, und zwar eine Beladungsphase und eine Entladungsphase.

In der Beladungsphase ist die Klappe 25 in die erste Endstellung geschaltet, so dass das gesamte Abgas der Brennkraftmaschine 10 in den ersten Zweig 16 und damit zu dem Oxidationskatalysator 17 und dem Speicherkatalysator 18 geführt wird. In dem Oxidationskatalysator 17 wird das in dem Abgas enthaltene NO in NO₂ umgewandelt. Dieses NO₂ wird daraufhin unter Bildung von NO₃ in dem nachfolgenden Speicherkatalysator 18 eingelagert. Dies stellt das Beladen des Speicherkatalysators 18 dar.

Da der Speicherkatalysator 18 nur eine begrenzte Ladeaufnahmekapazität für die zugeführten Stickoxide besitzt, muss nach einer vorgegebenen Zeitdauer von der Beladungsphase in die Entladungsphase umgeschaltet werden.

In der Entladungsphase wird die Klappe 25 auf eine Zwischenstellung zwischen den beiden Endstellungen eingestellt. Dies hat zur Folge, dass das Abgas der Brennkraftmaschine 10 in beide Zweige 16, 20 hineinströmt. Beispielsweise kann die Klappe 25 derart eingestellt werden, dass 10 % des Abgases in den ersten Zweig 16 gelangen, während die übrigen 90 % des Abgases in den zweiten Zweig 20 geführt werden.

In der Entladungsphase wird in dem ersten Zweig 16 ein Kraftstoff/Luft-Gemisch über den Zerstäuber 28 und den Verdampfer 29 dem dortigen Abgasstrom hinzugefügt. Dies hat zur Folge, dass - wie bereits erläutert wurde - ein kraftstoffbeladenes Gas in den Speicherkatalysator 18 gelangt. Dieses Gas wirkt als Reduktionsmittel in dem Speicherkatalysator 18 und hat damit zur Folge, dass der Speicherkatalysator 18 regeneriert bzw. entladen wird. Diese Entladungsphase muss für eine weitere, vorgegebene Zeitdauer durchgeführt werden. Am Ende der Entladungsphase wird dann wieder auf die Beladungsphase umgeschaltet.

Das Verhältnis der Entladungsphase zu der Beladungsphase kann beispielsweise derart gewählt werden, dass alle 20 Sekunden von der einen in die andere Phase umgeschaltet wird. Dieses Verhältnis kann auch in Abhängigkeit von Betriebsgrößen der Brennkraftmaschine 10 andersartig eingestellt werden.

In den Figuren 2a und 2b ist der Betrieb der Brennkraftmaschine 10 über der Zeit t jeweils aufgetragen. In den Figuren 2a und 2b ist derjenige Zeitpunkt, in dem von der Beladungsphase in die Entladungsphase umgeschaltet wird, jeweils mit dem Bezugszeichen 36 gekennzeichnet. In diesem Zeitpunkt 36 springt das Lambda des Abgases von einem Wert, der größer ist als 1, auf Lambda gleich 1.

In dem Zeitpunkt 36 wird die Klappe 25 und der Zerstäuber 28 gleichzeitig von dem Zusatzgerät 32 angesteuert. Dies bedeutet, dass in dem Zeitpunkt 36, in dem von der Beladungsphase in die Entladungsphase umgeschaltet wird, einerseits die Klappe 25 in eine Zwischenstellung zwischen den beiden Endstellungen geschaltet wird, so dass das Abgas der Brennkraftmaschine 10 den beiden Zweigen 16, 20 zugeführt wird, sowie andererseits gleichzeitig ein Kraftstoff/Luft-Gemisch über den Zerstäuber 28 dem ersten Zweig 16 und damit dem Speicherkatalysator 18 zugeführt wird. Durch dieses gleichzeitige Umschalten der Klappe 25 und des Zerstäubers 28 in die Entladungsphase wird erreicht, dass der Speicherkatalysator 18 ab diesem Zeitpunkt 36 regeniert und damit entladen wird.

Der Zeitpunkt, in dem von der Entladungsphase in die Beladungsphase wieder zurückgeschaltet wird, ist in den Figuren 2a und 2b mit der Bezugsziffer 37 gekennzeichnet. In diesem Zeitpunkt 37 springt das Lambda des Abgases von Lambda = 1 auf einen Wert, der größer ist als 1.

In der Figur 2a wird die Klappe 25 und der Zerstäuber 28 in dem Zeitpunkt 37 gleichzeitig von dem Zusatzgerät 32 angesteuert. Dies bedeutet, dass in dem Zeitpunkt 37 einerseits die Klappe 25 in ihre erste Endstellung umgeschaltet wird, in der das gesamte Abgas der Brennkraftmaschine 10 dem ersten Zweig 16 und damit dem Speicherkatalysator 18 zugeführt wird, sowie andererseits der Zerstäuber 28 abgeschaltet und damit kein Kraftstoff/Luft-Gemisch mehr dem ersten Zweig 16 zugeführt wird. Dieses gleichzeitige Umschalten der Klappe 25 und des Zerstäubers 28 in dem Zeitpunkt 37 von der Entladungsphase in die Beladungsphase hat eine Zusammensetzung des Abgases in dem Abgasrohr 23 gemäß der Figur 2a zur Folge.

Wie in der Figur 2a dargestellt ist, ist der Verlauf der Kohlenwasserstoffe HC und der Stickoxide NOx im Abgasrohr 23 abhängig von den Umschaltungen zwischen der Entladungsphase und der Beladungsphase. Insbesondere in den Zeitpunkten 37, in denen von der Entladungsphase in die Beladungsphase umgeschaltet wird, ist ein besonders hoher Anteil von Kohlenwasserstoffen HC im Abgas des Abgasrohres 23 vorhanden. Diese Spitzen des Kohlenwasserstoffes HC sind in der Figur 2a mit der Bezugsziffer 39 gekennzeichnet.

Wie der Figur 2b entnommen werden kann, sind dort - im Vergleich zu der Figur 2a - die Spitzen des Kohlenwasserstoffes HC nicht mehr vorhanden bzw. zumindest wesentlich geringer. Diese verbleibenden Spitzen sind in der Figur 2b mit den Bezugszeichen 40 gekennzeichnet.

Im Unterschied zu der Figur 2a wird bei der Figur 2b im Zeitpunkt 37 keine gleichzeitige Umschaltung der Klappe 25 und des Zerstäubers 28 von der Entladungsphase in die Beladungsphase durchgeführt. Stattdessen wird folgendes Vorgehen von dem Zusatzgerät 32 durchgeführt:

In dem Zeitpunkt 37 wird zuerst die Zuführung des Kraftstoff/Luft-Gemisches über den Zerstäuber 28 beendet. Dies bedeutet, dass der Zerstäuber 28 im Zeitpunkt 37 abgeschaltet wird. Die Klappe 25 wird jedoch in diesem Zeitpunkt 37 noch nicht verändert. Erst nach Ablauf einer vorgegebenen Spülzeit, die beispielsweise im Bereich von etwa 0,5 Sekunden bis etwa 3 Sekunden liegen kann, wird nach dem Zeitpunkt 37 die Klapppe 25 umgeschaltet. Dies bedeutet, dass erst nach Ablauf dieser Spülzeit nach dem Zeitpunkt 37 die Klappe 25 in ihre erste Endstellung geschaltet wird, so dass also erst nach Ablauf dieser Spülzeit das vollständige Abgas in den ersten Zweig 16 und damit zu dem Speicherkatalysator 18 geführt wird. Während der genannten Spülzeit verbleibt die Klappe 25 in ihrer Zwischenstellung, die für die Entladungsphase eingestellt worden ist.

Durch dieses aufeinanderfolgende Umschalten des Zerstäubers 28 und der Klappe 25 von der Entladungsphase in die Beladungsphase wird erreicht, dass das während der Entladungsphase über den Zerstäuber 28 zugeführte Kraftstoff/Luft-Gemisch während der Spülzeit, während der die Klappe 25 noch nicht umgeschaltet ist, von einem "kleinen" Abgasstrom zu dem Speicherkatalysator 18 befördert wird, so dass dieser Speicherkatalysator 18 nur von diesem "kleinen", kraftstoffbeladenen Abgasstrom regeneriert wird. Es wird also vermieden, dass das noch in dem ersten Zweig 16 vorhandene Kraftstoff/Luft-Gemisch aufgrund eines Umschaltens der Klappe 25 bereits im Zeitpunkt 37 von dem gesamten Abgasstrom zu dem Speicherkatalysator 18 geführt wird, und der Speicherkatalysator 18 damit von dem gesamten, kraftstoffbeladenen Abgasstrom beaufschlagt wird.

Aufgrund des aufeinanderfolgenden Umschaltens des Zerstäubers 28 und der Klappe 25 in die Beladungsphase wird erreicht, dass der Speicherkatalysator 18 so lange mit einem "kleinen" Abgasstrom regeneriert wird, wie er noch Kraftstoffdampf mit sich führt. Erst wenn etwa nach Ablauf der Spülzeit der restliche, noch während der Entladungsphase zugeführte Kraftstoffdampf den Speicherkatalysator erreicht und diesen regeneriert hat, wird die Klappe 25 umgeschaltet. Auf diese Weise wird erreicht, dass die Spitzen 39 von Kohlenwasserstoff HC der Figur 2a in der Figur 2b nicht oder zumindest nicht in diesem Umfang auftreten.

In der Figur 2b ist der Speicherkatalysator 18 somit aufgrund des "kleinen" Abgasstromes in der Lage, den zugeführten Kraftstoffdampf zur Regeneration zu verwerten, so dass kein Kohlenwasserstoff HC oder zumindest nahezu kein Kohlenwasserstoff HC in das Abgasrohr 23 gelangt. Aufgrund der Zuführung des gesamten Abgasstromes ab dem Zeitpunkt 37 in der Figur 2a ist dort der Speicherkatalysator 18 nicht in der Lage, sämtlichen Kraftstoffdampf zur Regeneration zu verwerten, so dass Kohlenwasserstoffe HC in großem Umfang - in Form der Spitzen 39 - in das Abgasrohr 23 entweichen.

In der Figur 1 wird zwischen dem Steuergerät 11 und dem Zusatzgerät 32 unterschieden. Damit soll deutlich gemacht werden, dass das Zusatzgerät 32 zusammen mit der Klappe 25, dem Stellglied 26, dem Zerstäuber 28, dem Verdampfer 29 und der Leitung 30 auch nachträglich in eine Brennkraftmaschine eingebaut werden können. Die Kopplung des Zusatzgerätes 32 erfolgt in diesem Fall - wie beschrieben - über das Bussystem 34. Alternativ ist es jedoch ebenfalls möglich, dass sämtliche Funktionen des Zusatzgerätes 32 in das Steuergerät 11 integriert sind. In diesem Fall ist kein separates Zusatzgerät 32 und auch kein Bussystem 34 vorhanden. Die erste Möglichkeit stellt somit ein Nachrüstprodukt dar, während bei der zweiten Möglichkeit sämtliche Funktionen schon im Erstprodukt enthalten sind.

## Patentansprüche

1. Verfahren zum Betreiben einer Brennkraftmaschine (10) insbesondere eines Kraftfahrzeugs, bei dem ein Speicherkatalysator (18) mit Stickoxiden beladen und entladen wird, bei dem der Abgasstrom durch den Speicherkatalysator (18) während des Entladens vermindert wird, und bei dem dem Abgasstrom durch den Speicherkatalysator (18) während des Entladens ein Kraftstoff/Luft-Gemisch zugefügt wird, **dadurch gekennzeichnet, dass** beim Umschalten vom Entladen zum Beladen des Speicherkatalysators (18) zuerst das Zufügen des Kraftstoff/Luft-Gemischs zu dem Abgasstrom beendet wird, und dass dann nach einer vorgegebenen Spülzeit die Verminderung des Abgasstroms beendet wird; wobei die Spülzeit derart vorgegeben ist, dass der Speicherkatalysator (18) noch so lange von dem verminderten Abgasstrom entladen wird, wie er noch ein Kraftstoff/Luft-Gemisch mit sich führt.

2. Verfahren nach Anspruch 1, **dadurch gekennzeichnet, dass** die Spülzeit in einem Bereich von etwa 0,5 Sekunden bis etwa 3 Sekunden liegt.

3. Verfahren nach Anspruch 1 oder 2, **gekennzeichnet durch** dessen Verwendung bei einer Diesel-Brennkraftmaschine.

4. Computerprogramm für ein Steuergerät (11) oder ein Zusatzgerät (32), das dazu geeignet ist, das Verfahren nach einem der vorstehenden Ansprüche durchzuführen, wenn es auf dem Steuergerät (11) oder dem Zusatzgerät (32) geladen und ausgeführt wird.

5. Computerprogramm nach Anspruch 4, **gekennzeichnet durch** dessen Speicherung auf einem elektrischen Speichermedium, beispielsweise auf einem Flash-Memory.

6. Steuergerät oder Zusatzgerät für eine Brennkraftmaschine (10) insbesondere eines Kraftfahrzeugs, wobei bei der Brennkraftmaschine (10) ein Speicherkatalysator (18) vorgesehen ist, der mit Stickoxiden beladen und entladen werden kann, wobei durch das Steuergerät (11) oder das Zusatzgerät (32) mittels einer Klappe (25) der Abgasstrom durch den Speicherkatalysator (18) während des Enladens vermindert werden kann, und wobei durch das Steuergerät (11) oder das Zusatzgerät (32) mittels eines Zerstäubers (28) dem Abgasstrom durch den Speicherkatalysator (18) während des Entladens ein Kraftstoff/Luft-Gemisch zugefügt werden kann, **dadurch gekennzeichnet, dass** durch das Steuergerät (11) oder das Zusatzgerät (32) beim Umschalten vom Entladen zum Beladen des Speicherkatalysators (18) zuerst das Zufügen des Kraftstoff/Luft-Gemischs zu dem Abgasstrom beendet wird, und dass dann nach einer vorgegebenen Spülzeit die Verminderung des Abgasstroms beendet wird, wobei die Spülzeit derart vorgegeben ist, dass der Speicherkatalysator (18) noch so lange von dem verminderten Abgasstrom entladen wird, wie er noch ein Kraftstoff/Luft-Gemisch mit sich führt.

7. Brennkraftmaschine (10) insbesondere eines Kraftfahrzeugs, wobei bei der Brennkraftmaschine (10) ein Speicherkatalysator (18) vorgesehen ist, der mit Stickoxiden beladen und entladen werden kann, wobei durch ein Steuergerät (11) oder ein Zusatzgerät (32) mittels einer Klappe (25) der Abgasstrom durch den Speicherkatalysator (18) während des Enladens vermindert werden kann, und wobei durch das Steuergerät (11) oder das Zusatzgerät (32) mittels eines Zerstäubers (28) dem Abgasstrom durch den Speicherkatalysator (18) während des Entladens ein Kraftstoff/Luft-Gemisch zugefügt werden kann, **dadurch gekennzeichnet, dass** durch das Steuergerät (11) oder das Zusatzgerät (32) beim Umschalten vom Entladen zum Beladen des Speicherkatalysators (18) zuerst das Zufügen des Kraftstoff/Luft-Gemischs zu dem Abgasstrom beendet wird, und dass dann nach einer vorgegebenen Spülzeit die Verminderung des Abgasstroms beendet wird, wobei die Spülzeit derart vorgegeben ist, dass der Speicherkatalysator (18) noch so lange von dem verminderten Abgasstrom entladen wird, wie er noch ein Kraftstoff/Luft-Gemisch mit sich führt.

## Claims

1. Method for operating an internal combustion engine (10), in particular of a motor vehicle, in which a storage catalytic converter (18) is loaded with nitrogen oxides and unloaded again, in which the exhaust-gas stream passing through the storage catalytic converter (18) is reduced during the unloading operating, and in which a fuel/air mix is added to the exhaust-gas stream passing through the storage catalytic converter (18) during the unloading operation, **characterized in that** in the event of a switch from unloading to loading of the storage catalytic converter (18), first of all the addition of the fuel/air mix to the exhaust-gas stream is terminated, and **in that** then, after a predetermined purge time, the reduction of the flow of the exhaust-gas stream is terminated, the purge time being predetermined in such a manner that the storage catalytic converter (18) continues to be unloaded by the reduced flow of exhaust-gas stream for as long as the latter is still carrying a fuel/air mix with it.

2. Method according to Claim 1, **characterized in that** the purge time is in a range from 0.5 second to approximately 3 seconds.

3. Method according to Claim 1 or 2, **characterized by** its use in a diesel internal combustion engine.

4. Computer programme for a control unit (1) or an additional unit (32), which is suitable for carrying out the method according to one of the preceding claims when it is loaded and executed on the control unit (11) or the additional unit (32).

5. Computer programme according to Claim 4, **characterized by** it being stored on an electrical storage medium, for example on a flash memory.

6. Control unit or additional unit for an internal combustion engine (10), in particular of a motor vehicle, in which the internal combustion engine (10) has a storage catalytic converter (18) which can be loaded with nitrogen oxides and unloaded again, it being possible for the exhaust-gas stream flowing through the storage catalytic converter (18) to be reduced by the control unit (11) or the additional unit (32) by means of a valve (25) during the unloading operation, and it being possible for a fuel/air mix to be added to the exhaust-gas stream flowing through the storage catalytic converter (18) by the control unit (11) or the additional unit (32) by means of an atomizer (28) during the unloading operation, **characterized in that**, in the event of a switch from unloading to loading of the storage catalytic converter (18), the control unit (11) or the additional unit (32) first of all terminates the addition of the fuel/air mix to the exhaust-gas stream, and **in that** then, after a predetermined purge time, the reduction in the flow of the exhaust-gas stream is terminated, the purge time being predetermined in such a manner that the storage catalytic converter (18) continues to be unloaded by the reduced flow of the exhaust gas stream for as long as the latter is still carrying a fuel/air mix.

7. Internal combustion engine (10), in particular of a motor vehicle, in which a storage catalytic converter (18), which can be loaded with nitrogen oxides and unloaded again, is provided at the internal combustion engine (10), it being possible for the exhaust-gas stream flowing through the storage catalytic converter (18) to be reduced by a control unit (11) or an additional unit (32) by means of a valve (25) during the unloading operation, and it being possible for a fuel/air mix to be added to the exhaust-gas stream flowing through the storage catalytic converter (18) by the control unit (11) or the additional unit (32) by means of an atomizer (28) during the unloading operation, **characterized in that** in the event of a switch from unloading to loading of the storage catalytic converter (18), the control unit (11) or the additional unit (32) first of all terminates the addition of the fuel/air mix to the exhaust-gas stream, and **in that** then, after a predetermined purge time, the reduction in the flow of the exhaust-gas stream is terminated, the purge time being predetermined in such a manner that the storage catalytic converter (18) continues to be unloaded by the reduced flow of the exhaust-gas stream for as long as the latter is still carrying a fuel/air mix.

## Revendications

1. Procédé de gestion d'un moteur à combustion interne (10) notamment d'un véhicule automobile,
selon lequel un catalyseur d'accumulation (18) est chargé et déchargé d'oxydes d'azote,
on réduit pendant le déchargement le courant de gaz d'échappement qui traverse le catalyseur d'accumulation (18), et on ajoute durant le déchargement, un mélange de carburant et d'air au flux de gaz d'échappement qui traverse le catalyseur d'accumulation (18),
**caractérisé en ce que**
lors de la commutation faisant passer du déchargement au chargement du catalyseur d'accumulation (18), on termine d'abord l'addition du mélange de carburant et d'air au courant de gaz d'échappement, et ensuite, après une durée de rinçage prédéfinie, on termine la réduction du flux de gaz d'échappement,
cette durée de rinçage étant prédéfinie de telle sorte que le catalyseur d'accumulation (18) continue à être déchargé du flux de gaz d'échappement réduit aussi longtemps qu'il entraîne encore avec lui un mélange de carburant et d'air.

2. Procédé selon la revendication 1,
**caractérisé en ce que**
la durée de rinçage se situe dans une gamme allant d'environ 0,5 secondes à environ 3 secondes.

3. Procédé selon la revendication 1 ou 2,
**caractérisé par**
son utilisation pour un moteur Diesel à combustion interne.

4. Programme informatique pour un appareil de commande (11) ou un appareil auxiliaire (32),
approprié pour exécuter le procédé selon l'une des revendications précédentes lorsqu'il est chargé et exécuté sur un appareil de commande (11) ou un appareil auxiliaire (32).

5. Programme informatique selon la revendication 4,
**caractérisé par**
son enregistrement sur un support de mémoire électrique, par exemple dans une mémoire flash.

6. Appareil de commande ou appareil auxiliaire pour un moteur à combustion interne (10), notamment d'un véhicule automobile, avec un catalyseur d'accumulation (18), pouvant être chargé et déchargé d'oxydes d'azote, prévu dans le moteur à combustion interne (10),
le flux de gaz d'échappement qui traverse le catalyseur d'accumulation (18) pouvant être réduit, durant le déchargement, par l'appareil de commande (11) ou l'appareil auxiliaire (32) au moyen d'un volet (25), en ajoutant un mélange de carburant et d'air au flux de gaz d'échappement qui traverse le catalyseur d'accumulation (18), durant le déchargement, par l'appareil de commande (11) ou l'appareil auxiliaire (32) au moyen d'un pulvérisateur (28),
**caractérisé en ce que**
lors de la commutation faisant passer du déchargement au chargement du catalyseur d'accumulation (18), l'appareil de commande (11) ou l'appareil auxiliaire (32) termine d'abord l'addition du mélange de carburant et d'air au courant de gaz d'échappement
et termine ensuite, après une durée de rinçage prédéfinie, la réduction du flux d'échappement,
cette durée de rinçage étant prédéfinie de telle sorte que le catalyseur d'accumulation (18) continue à être déchargé du flux de gaz d'échappement réduit aussi longtemps qu'il entraîne encore avec lui un mélange de carburant et d'air.

7. Moteur à combustion interne (10) notamment d'un véhicule automobile, comportant un catalyseur d'accumulation (18), pouvant être chargé et déchargé d'oxydes d'azotes,
le flux de gaz d'échappement qui traverse le catalyseur d'accumulation (18) pouvant être réduit, durant le déchargement, par un appareil de commande (11) ou un appareil auxiliaire (32) au moyen d'un volet (25),
en ajoutant un mélange de carburant et d'air au flux de gaz d'échappement qui traverse le catalyseur d'accumulation, durant le déchargement, par l'appareil de commande (11) ou l'appareil auxiliaire (32) au moyen d'un pulvérisateur (28),
**caractérisé en ce que**
lors de la commutation faisant passer du déchargement au chargement du catalyseur d'accumulation (18), l'appareil de commande (11) ou l'appareil auxiliaire (32) termine d'abord l'addition du mélange de carburant et d'air au courant de gaz d'échappement
et termine ensuite, après une durée de rinçage prédéfinie, la réduction du flux d'échappement,
cette durée de rinçage étant prédéfinie de telle sorte que le catalyseur d'accumulation (18) continue à être déchargé du flux de gaz d'échappement réduit aussi longtemps qu'il entraîne encore avec lui un mélange de carburant et d'air.
